# EUROPEAN PATENT APPLICATION

(11) **EP 2 526 891 A1**
(43) Date of publication of application: **28.11.2012**
(21) Application number: 12382185.2
(22) Date of filing: 21.05.2012
(51) Int. Cl.: A61C 5/04, A61C 5/02

(54) **Endodontic obturator with a handle**

(30) Priority: 23.05.2011 ES 201100478 U
(71) Applicant: Florit Marti, Luis, 08034 Barcelona (ES)
(72) Inventor: Florit Martí, Luis, 08034 Barcelona (ES); Florit Macau, Rita, 08034 Barcelona (ES)
(74) Representative: Carvajal y Urquijo, Isabel

(57) **Abstract**

An endodontic obturator with a handle is formed by an obturator needle (1) and a handle (2) for handling and allowing the application of the needle (1) in the corresponding root canal. The handle (2) and the needle (1) are attached by an intermediate rod (4) through which the sectioning for removing the handle (2) is carried out after applying the obturator needle (1). The obturator needle (1) has an axial and concentric perforation (3), while the handle (2) and the corresponding intermediate attachment rod (4) between needle (1) and handle (2) are formed by two equal halves (5, 5'), which are initially separated and projected in opposition to allow the perforation of the obturator needle (1). Both halves (5, 5') of the handle (2) are coupled in the use position in an overlapping manner with respect to one another forming an axial continuity with the needle (1).

## Description

### Object of the Invention

The present invention relates to an endodontic obturator with a handle, in which the typical needle forming the obturator is concentrically perforated establishing a hollow completely surrounded by the same material which is the endodontic obturator and carrier material in question, the handle and the attachment rod for attaching the latter to the needle further being formed by two halves that can be coupled to one another so that said handle forms a continuity of the obturator needle when in use.

The object of the invention is to facilitate the operation for placing the endodontic obturator, as well as to likewise facilitate the removal in case of infection or bad placement.

### Background of the Invention

As is known, endodontic obturators are used to seal root canals in the most impermeable manner possible for the purpose of preventing the passage of germs, food and biological exudates. Root cement is used in addition to said obturators to achieve the best possible sealing. Said hermetic and fixed closure can be a setback when attempting to remove the placed material to disinfect the root canal again, in the case of this complication or infection arising.

To de-obturate the infected or even badly sealed canal, solvents of the obturator are sometimes used, such as ethylene tetrachloride, although this product is very toxic and slow to work.

Mechanical methods can equally be used, which are also slow and which furthermore sometimes break the endodontic file used in the attempt to remove the material, causing an added problem, since in the case of said file breaking, it is necessary to remove it as well as the obturating material to be removed in the first place.

Various root canal obturating systems are known, made in the attempt to improve placing the root canal obturator or sealer, as well as facilitating condensation and compression. In that sense, patent US 3,903,605 describes an obturator which is concentrically perforated, although it is designed to be driven to its final position by means of a carrier, further needing additional instruments for its placement and condensation.

Patent ES 2,060,006 also describes an obturator which is perforated by means of a conducting rod of another material, all for the purpose of conducing the sealing material to its position, so there are two well distinguished materials in this patent, one being the conductor and the other the sealer, all in a manner such that the material is not perforated at the end of the procedure, rather the conducting rod perforates it, but when the rod breaks in the canal to be able to remove the corresponding conducting handle, it is not perforated, with the material in the corresponding sealing canal and a rod inside, such that even though perforated, it is not hollow.

Patent USA 5833457 describes an obturator with a side perforation and with a closure in the portion most distal to the tip, for the purpose of facilitating and making removing the obturator more flexible in case of infection or another reason.

Document US 2010/0167232 A1 can also be cited, in which the obturator filling material itself is perforated by a conducting rod, forming different or independent elements, without specifying whether the driving rod is removed to leave a perforation in the obturator needle or filling material itself. In fact, the conducting rod is broken together with the filling material to leave it all inside the root canal and therefore it not being perforated.

It is not possible to manufacture the perforated obturation needle which is linked to the corresponding operating handle, all forming a unit made of the same material, in any of the aforementioned documents.

### Description of the Invention

The proposed endodontic obturator, being of the type comprising an obturator needle and an operating handle, with an intermediate rod, has the particularity that the obturator needle has a concentric perforation, while the handle and the corresponding intermediate rod are determined by two equal halves, establishing a free space for centrally perforating the obturator needle in its production process.

In summary, in the endodontic obturator of the invention the needle in which said obturator is made is longitudinally and concentrically perforated, where the resulting hollow of that perforation is completely surrounded by the same material and corresponding to the obturator and carrier material at the same time, with the exception of the area most distal to the tip of the obturator needle itself, said tip is closed.

For the obturation of the obturator needle to technically be performed, it has been envisaged that both the rod and the handle are formed by two equal parts or halves allowing the passage of the steel needle of the die which perforates the obturator needle inside the production die, such that at the time of implanting the obturator, i.e., inserting the obturator needle in the corresponding root canal, the two halves of the handle are attached so that it is rendered as an axial prolongation of the rear end of the needle, with the corresponding intermediate rod.

Both halves of the handle are attached in a very simple manner because both halves will have a protrusion on their attachment face, complementary to a cavity in the other one of the halves, such that the protrusion of one half will be snap-fitted into the housing of the other half and vice versa.

The obturator assembly will preferably be made of one and the same polymeric material, forming a single unit: handle, rod and obturator needle.

Said obturator can be removed in case of infection or bad placement thereof, allowing inserting a file therein and screwing it into the orifice established at the distal end of the perforating needle, such that removing the obturation tip when pulling in the direction of the longitudinal axis will be easy, not allowing any rotating instrument to break inside the canal, the torsion of which is minimal when introducing the instrument into the perforated part of the perforating needle.

It is likewise possible to increase the pressure on the walls of the root canal forcing the sealing cement towards the small orifices of said canal, since the obturator needle can be deformed easily because it is hollow, it will put pressure on the walls because it is made of a deformable material.

Another advantage is that the obturator is very flexible since the outer wall can be made of the desired diameter, as long as it is manufactured from an appropriate polymer.

The easy placement of the obturator is also advantageous, since the needle can be produced with a breakable rod facilitating breaking to remove the handle.

Lastly, it is advantageous for the obturator assembly to be manufactured forming a single part, without distinguishing between obturator material and applicator material, i.e., rod, obturator needle and handle are made of the same material, facilitating production. The amount of instruments used in the placement is also reduced, as no heating or ultrasound machine is needed, as required with most conventional obturators.

### Description of the Drawings

To complement the description which is being made and for the purpose of aiding to better understand the features of the invention according to a preferred practical embodiment thereof, a set of drawings is attached as an integral part of said description in which the following has been depicted with an illustrative and non-limiting character:
Figure 1 shows a depiction corresponding to an elevational view of the obturator of the invention in which the two separated halves of the handle, i.e., projected on both sides with respect to the base of the needle making up the perforator itself, can be seen.
Figures 2 shows a plan view of the assembly depicted in the above figure.
Figure 3 shows a view of the obturator assembly, the longitudinal continuity between obturator needle, rod and handle being seen, all forming an assembly in position to be placed inside the corresponding root canal.

### Preferred Embodiment of the Invention

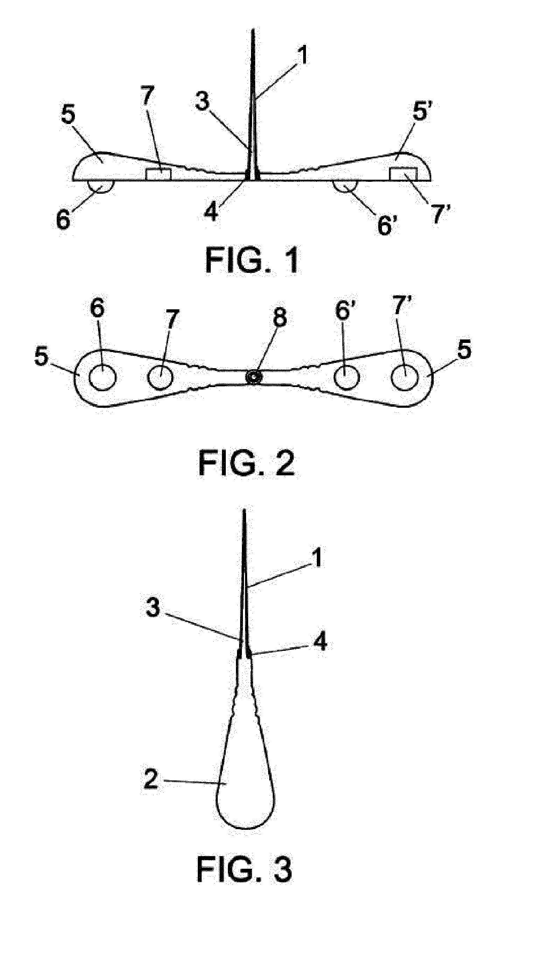

As can be seen in the mentioned figures, the endodontic obturator of the invention comprises a needle (1) as the perforating element itself, and a handle (2), where the needle (1) has a concentric and longitudinal perforation (3), while the handle (2) is attached to that perforated needle (1) by means of an intermediate rod (4), with the special particularity that both this and the handle (2) are formed by respective halves, referenced with number (5, 5') for the handle (2) itself, with the particularity that in that position depicted in Figure 1, the two halves of the handle (5, 5') are open and in opposition, establishing a passage (8) together with the two halves of the intermediate rod (4), to be able to carry out the axial and concentric perforation (3) of the obturator needle (1), such that after having made that perforation, and for applying the obturator assembly, the two halves (5, 5') of the handle (2) are closed, the locking position being stable based on respective lugs or protrusions (6, 6') provided on the opposing faces of the halves (5, 5') of the handle (2), the lugs or protrusions (6, 6') of which being housed in a snap-fitted manner in respective cavities (7, 7') provided for that purpose in both halves (5, 5') in the closure between both halves (5, 5'), as can clearly be seen in Figures 1 and 2.

When the obturator is applied, i.e., the obturator needle (1) on the root canal, the operation to follow is as that depicted in Figure 3 to be able to carry out the corresponding operation by means of the handle (2) and, once the obturator needle (1) is applied in the root canal, to carry out the sectioning through the intermediate rod (4), to remove the corresponding handle (2), readily enabling extraction in any circumstance, such as a bad placement, an infection, etc.

## Claims

1. An endodontic obturator with a handle, being formed by an obturator needle (1) and a handle (2) for handling and allowing the application of the needle (1) in the corresponding root canal, the handle (2) and needle (1) being attached by means of an intermediate rod (4) through which the sectioning for removing the handle (2) is carried out after applying the obturator needle (1), **characterised in that** said obturator needle (1) has an axial and concentric perforation (3), while the handle (2) and the corresponding intermediate attachment rod (4) between needle (1) and handle (2) are formed by two equal halves (5, 5'), which are initially separated and projected in opposition to allow the perforation of the obturator needle (1) itself, while both halves (5, 5') of the handle (2) are coupled in the use position in an overlapping manner with respect to one another forming an axial continuity with the needle (1).

2. The endodontic obturator with a handle according to claim 1, **characterised in that** the two halves (5, 5') of the handle (2) are provided with a lug or protrusion (6, 6') complementary to a cavity or housing (7, 7') established in each of the same halves (5, 5'), the lugs or protrusions (6, 6') being housed in a snap-fitted manner in the respective cavities or housings (7, 7'), establishing a stable closure position for forming the handle (2).
